# EUROPEAN PATENT SPECIFICATION

(11) **EP 0 895 597 B1**
(45) Date of publication and mention of the grant of the patent: **06.10.2004**
(21) Application number: 97921063.0
(22) Date of filing: 25.04.1997
(51) Int. Cl.: G01P 13/02

(54) **WIND DIRECTION INDICATOR**
WINDRICHTUNGSANZEIGER
INDICATEUR DE DIRECTION DU VENT

(30) Priority: 25.04.1996 SE 9601582
(43) Date of publication of application: 10.02.1999
(73) Proprietor: Johansson, Kent, 891 34 Ornsköldsvik (SE)
(72) Inventor: Johansson, Kent, 891 34 Ornsköldsvik (SE)
(74) Representative: Onn, Thorsten
(86) International application number: PCT/SE1997/000701
(87) International publication number: WO 1997/040390

(56) References cited:
- US-A- 1 902 763
- US-A- 1 913 672
- US-A- 4 627 278

## Description

This invention relates to a wind direction indicator for airports and the like, which comprises, in using position, an essentially horizontal windsock, which is made of a fabric or the like, and which is open in its front end, which is fastened to a device, that is rotatable about an essentially vertical shaft, so that the wind sock easily can put itself into the wind direction. The invention also relates to a wind sock for use in wind direction indicators.

This type of wind direction indicator is previously known and is preferably used at airports so that the wind direction at the airport can be clearly indicated. The problem with known wind direction indicators has been that these ones have been difficult to discover in darkness but also in the daytime when there is strong sunlight.

US 1 913 672 shows a wind sock having a lamp and a reflector to make the sock illuminated and thereby visible in darkness but the sock is difficult to discover in the daytime when there is strong sunlight.

This invention intends to eliminate the problem with known technique and to provide a wind direction indicator, which is easily discovered at night but also in the daytime when there is strong sunlight. This has been made possible by a wind direction indicator of the kind mentioned by way of introduction, which is characterised in that it comprises a lamp, which emits ultraviolet light, and that the fabric is coated with such a colour that this one fluoresces when being irradiated by the ultraviolet light. Due to that fact the windsock will be strongly outlined against the surroundings also in the daytime, when there is strong sunlight, wherefore that moment of the airport-work comprising the determination of the wind direction is essentially facilitated.

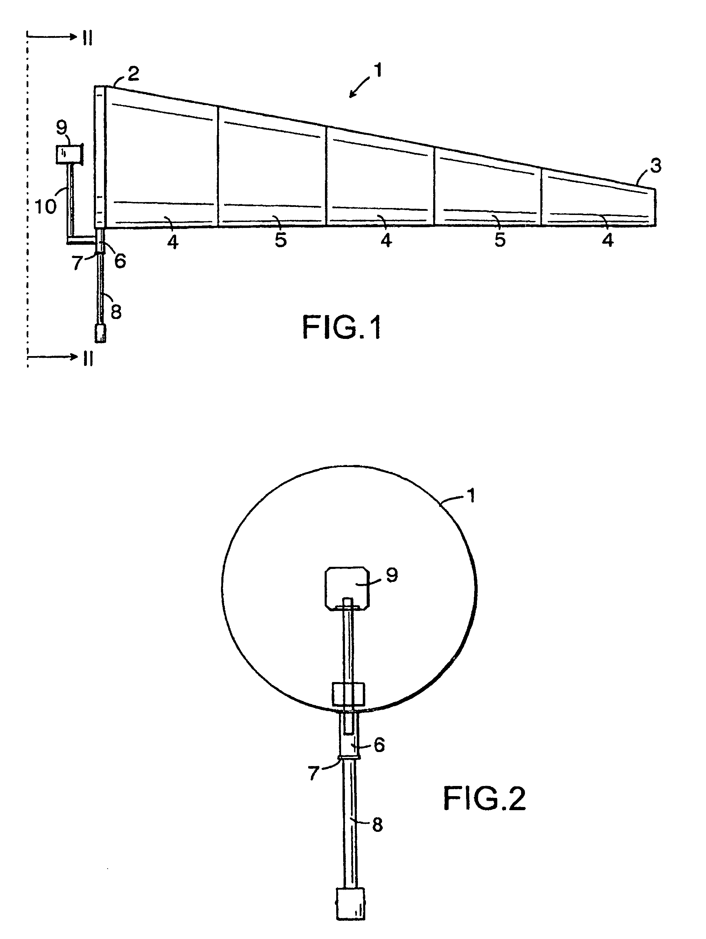

An embodiment of the invention shaft be described more closely below with reference to the accompanying drawing, where Fig. 1 shows the wind direction indicator, seen from the side, and Fig. 2 shows the wind direction indicator according to figure 1, seen in the direction of the arrows II-II.

The wind direction indicator according to the invention comprises, in using position, an essentially horizontal windsock 1, which has a front end 2 , that is open, and a rear end 3, that normally also is open. The windsock in accordance to the regulations for this range of application has evident orange 4 and white 5 fields, which are alternately positioned, i.e. an orange field, a white field, an orange field etc. The front end 2 of the wind sock is fastened on an essentially vertically arranged, first rod 6, which via a bearing 7 is rotable about a second, essentially vertically arranged rod 8. Due to that fact the windsock can easily put itself into the wind direction.

The windsock 1 is made of a fabric, preferably of polyester plastic, which has been subjected to a crochet work and has a sparse structure, wherefore the windsock resists moisture and air pollutions better than a normal fabric. The sparse structure of the fabric has a positive influence on its drying time, which makes the windsock easier and more stable regarding the direction.

The fabric of the windsock is according to the invention coated with a colour, which has such a character that it fluoresces when being irradiated by ultraviolet light That fact that the colour of fabric of the windsock fluoresces means that the windsock will well be made property dear in darkness as well as in daylight, when the sunlight flows. Furthermore, the colour according to the invention has such a character that a white surface, which is coated with the colour, and which is irradiated by ultraviolet light, will reflect ice-white light, which fact is extremely important in this connection, because the different red and white fields of the windsock must be able to be discovered dearly in the day as well as in the night.

When using a conventional colour, coated on a white surface, a bluish light would be re-reflected, which should be unacceptable in this connection.

In order to achieve the mentioned fluorescense-effect, the wind direction indicator is provided with a lamp 9, which emits ultraviolet light, and which is arranged in front of the front end 2 of the windsock 1, so that the lamp can light straightly into the wind sock. This UV-lamp is built together with a reflector and is fastened on a third, essentially vertically arranged rod 10, which is built together with the first rod 6, on which the front end of the windsock 1 is fastened. This means that the lamp 9 follows the windsock during the turning of this one in relation to the second rod 8 and has accordingly the same position in relation to the windsock all the time.

As has already been mentioned, previously known wind direction indicators have had that drawback that they have not presented desired visibility in the daytime when there is strong sunlight Due to the design of this new wind direction indicator, its fabric will fluoresce in daylight, even if the UV-lamp is not lighted, because the fluorescence-effect in daytime is achieved by the ultraviolet rays of the daylight, which irradiate the fabric of the wind direction indicator.

The wind direction indicator according to the invention, due to its special design, will of course be clearly made evident for those concerned, even if the weather should be foggy or rainy or if sleet should prevail.

The invention is not limited to the shown and described embodiment but can be modified within the scope of the following claims.

## Claims

1. A wind direction indicator for airports, which comprises, in using position, an essentially horizontal windsock. that is made of a fabric or the like and is open in its front end, the wind sock having evident orange and white fields, which are alternately positioned, and the front end of the wind sock being fastened to a device, that is rotatable about an essentially vertical shaft, so that the windsock easily can put itself into the wind direction, **characterized in that** it comprises a lamp (9), which emits ultraviolet light, and that the fabric is coated with such a colour that this one fluoresces when being irradiated by ultraviolet light; the colour having such character that a white surface, that is coated with the mentioned colour, and that is irradiated by ultraviolet light, will reflect essentially white light in return.

2. A wind direction indicator according to claim 1, **characterized in that** the UV-lamp (9) is built together with a reflector and is arranged **in that** way that it follows the windsock (1) during its turning about the vertical shaft, whereby the UV-lamp, turned on, will light straightly into the windsock, independently of the position of the same.

3. A windsock according to claim 1 or 2, **characterized in that** the fabric is made of a polyester material, which is in a crochet condition and has a relatively sparse structure.

## Patentansprüche

1. Windrichtungsanzeiger für Flughäfen, mit einem im Betrieb im wesentlichen horizontalen, am Vorderende offenen Windsack aus Stoff oder dergleichen mit abwechselnd angeordneten, gut sichtbaren orangen und weissen Feldern, wobei das Vorderende des Windsacks an einer Vorrichtung befestigt ist, die um eine im wesentlichen senkrechte Welle drehbar ist, so dass sich der Windsack leicht in Windrichtung bringen kann, **gekennzeichnet durch** eine Lampe (9), welche ultraviolettes Licht ausstrahlt, und **dadurch**, dass der Stoff mit einer Farbe beschichtet ist, welche bei Bestrahlung mit ultraviolettem Licht fluoresziert und so geartet ist, dass eine mit der genannten Farbe beschichtete und mit ultraviolettem Licht bestrahlte weisse Fläche im wesentlichen weisses Licht reflektiert.

2. Windrichtungsanzeiger nach Anspruch 1, **dadurch gekennzeichnet, dass** die UV-Lampe (9) mit einem Reflektor zusammengebaut ist und derart angeordnet ist, dass sie dem Windsack (1) bei dessen Drehung um die senkrechte Welle folgt, wobei die eingeschaltete UV-Lampe unabhängig von der Stellung des Windsacks gerade in denselben hineinleuchtet.

3. Windsack nach Anspruch 1 oder 2, **dadurch gekennzeichnet, dass** der Stoff aus einem Polyestermaterial besteht, welches gehäkelt ist und eine relativ lichte Struktur aufweist.

## Revendications

1. Indicateur de direction du vent pour aéroports, comprenant une manche à air essentiellement horizontale en position d'utilisation, en tissu ou autre matériau du genre et ouverte à son extrémité avant, la manche à air présentant des champs oranges et blancs bien visibles, disposés en positions alternantes, et l'extrémité avant de la manche à air étant attachée à un dispositif rotatif autour d'un arbre essentiellement vertical de telle manière que la manche à air peut facilement se placer dans la direction du vent, **caractérisé en ce qu'**il comprend une lampe (9) qui émet de la lumière ultraviolette, et **en ce que** le tissu est revêtu d'un colorant qui entre en fluorescence lorsqu'il est irradié par de la lumière ultraviolette, le colorant ayant un caractère tel qu'une surface blanche revêtue du colorant mentionné et irradiée par de la lumière ultraviolette réfléchira de la lumière essentiellement blanche.

2. Indicateur de la direction du vent selon la revendication 1, **caractérisé en ce que** la lampe UV (9) est munie d'un réflecteur et agencée de telle manière qu'elle suit la manche à air (1) lorsque celle-ci tourne autour de l'arbre vertical, de sorte que la lampe UV enclenchée rayonne en ligne droite dans la manche à air indépendamment de la position de celle-ci.

3. Manche à air selon la revendication 1 ou 2, **caractérisée en ce que** le tissu est constitué d'un matériau en polyester lequel est crocheté et présente une structure relativement ajourée.
